# EUROPEAN PATENT SPECIFICATION

(11) **EP 0 617 095 B1**
(45) Date of publication and mention of the grant of the patent: **13.08.1997**
(21) Application number: 94400632.9
(22) Date of filing: 24.03.1994
(51) Int. Cl.: C09D 5/00, C09D 7/12

(54) **Low-gloss compositions for high reflectance films in the infra-red range**
Zusammensetzungen mit geringem Glanz für hoch-reflektierende Filme im Infrarot-Bereich
Compositions de faible brillance pour des films de haute réflexion dans l'infrarouge

(30) Priority: 25.03.1993 IL 10516793
(43) Date of publication of application: 28.09.1994
(73) Proprietor: THE STATE OF ISRAEL, MINISTRY OF DEFENSE, RAFAEL ARMAMENT DEVELOPMENT AUTHORITY, Haifa 31 021 (IL)
(72) Inventor: Wassermann, Shulamit, Haifa (IL)
(74) Representative: Portal, Gérard

(56) References cited:
- EP-A- 0 527 480
- DATABASE WPI Week 9335, Derwent Publications Ltd., London, GB; AN 93278462 & JP-A-5 194 937 (OHTSU TIRE & RUBBER) 3 August 1993
- DATABASE WPI Week 9335, Derwent Publications Ltd., London, GB; AN 93278462 & JP-A-5 194 937

## Description

The present invention relates to low-gloss compositions for high reflectance films in the infra-red range. More particularly the invention relates to low-gloss compositions for various dispersions, such as paints or multi layer of oxides possessing a low emissivity in the thermal infra-red range.

### BACKGROUND OF THE INVENTION

Paints are known to comprise suspension of one or more colouring constituents in a liquid-forming binder capable of converting to a solid film when a thin layer of it is applied to a metal, wood, stone, paper, or other surface and produces a continuous coloured film. The surface becomes coloured because it absorbs light of certain wavelengths. Many film-forming materials are used both as clear coatings and as pigment/binders mixtures. In case of solution vehicles, the binder is dissolved in a solvent to form a clear, viscous solution, and the pigment or the oxide is dispersed directly into the vehicle solution. On film formation the solidified vehicle serves to bind the pigment, forming a continuous film phase. Vehicles belonging to this category include drying oils, varnishes, synthetic resins and high polymeric materials such as the cellulosic and vinyl polymers.

In another type of vehicle the resins are dispersed in a liquid. Dispersion resins are in the form of tiny, spherical, insoluble particles suspended in a volatile liquid such as water or any volatile solvent. When the liquid evaporates, discrete particles of pigment, oxide or resin remain as a continuous film. Examples of dispersion coatings include the polyvinyl chloride organosols and synthetic rubber latexes. Modern paints are "tailor-made" coatings which are usually designed by skilled scientists for specific purposes. Thus, there are known various types of paints, such as paints against corrosion, insulating paints which withstand at high temperatures, and paints for electric conductance. An important constituent in the paint dispersion is the binder which imparts the film forming properties. Some of the constituents possess different optical functions and are selected according to their spectral properties.
Almost all the paints on the market, comprise pigments and fillers which should fulfill the optical requirements at visible light, i.e. an electromagnetic radiation with a wavelength in the range of 0.4-0.7 micrometers.
The three main constituents of the paints are:
(a) Pigments having the function to give the paint the opacity, colour and added durability, by protecting the oil and resin film from ultraviolet light.
(b) Binders, which impart film forming properties.
(c) Fillers, also known as matting reagents which have the property to aid in protecting the paint from weathering of the dyes and also to reduce the gloss of a paint.

When an electro-magnetic radiation hits a certain surface a part of it is reflected and the other part is refracted inside to the subsequent layer, being transmitted or absorbed. The reflected radiation comprises two main components: specular radiation and diffusive radiation. The specular surfaces possess a mirror-like appearance being obtained by volatilization of thin metals particles on a polished substrate.
There are cases when it is most desirable that the layer of the film resulted from a binder, should possess a low gloss property, which is generally achieved by adding a filler material such as, calcium carbonate, silicate, and colloidal silica. These compounds are actually used in most of the cases where no particular requirements on their absorption in the infra-red region is imposed. However, in case of films produced by paints which possess a high reflectance in the thermal infra-red range of 3 to 12 micrometers, these materials are not suitable.
In our previous Israeli patent application number 092550, paints useful for high reflective means which provide colour in the visible range and high reflectivity in the range of 3 to 14 µm were described, comprising paints with a high reflectivity and a suitable carrier, selected from thermosetting or thermoplastic compounds such as: epoxy, acrylic, silicone, and polyvinyl chloride.
It is an object of the present invention to provide new compositions possessing film forming properties comprising specific filler additives possessing high reflectance in the thermal infra-red wavelenghts. It is another object of the present invention to provide new compositions possessing film forming properties wherein said filler additives decrease the gloss appearance at visible light.

### BRIEF DESCRIPTION OF THE INVENTION

The invention relates to compositions comprising a binder to impart film forming properties and a quasi-transparent filler particles possessing low emissivity in the thermal infra-red wavelengths, in the range of between 3 to 5 µ (1 µ = 1 µm) and 8 to 12 µ, consisting of thin layers, wherein said filler decreases the gloss appearance of said compositions, said filler comprising a polyolefin selected from the group consisting of ethylene homopolymers and copolymers, propylene homopolymers and copolymers, ethylene and propylene copolymers, and mixtures thereof, said compositions having an index of refraction of the polyolefin-air of at least 10% greater than that of the binder-air.
According to the invention, the filler is imparting to the compositions a mat property at the visible light.
According to an advantageous embodiment, the filler particles have a size below 110 micrometers. They are preferably present in the composition in the range of 0.1 % to 10 % by weight of the composition.
According to a more preferred embodiment, the polyolefin filler particles are present in an amount ranging between 0.3% and 5% by weight of the composition.
According to a further advantageous embodiment, said composition comprises at least one and preferably at least two oxides.
Most preferably, said oxide is selected from the group consisting of chromium oxide, nickel oxide, iron oxide, manganese oxide and cobalt oxide and mixtures thereof.
According to another adavantageous embodiment, the particles of the polyolefin filler have a shape selected from the group consisting of a substantially round shape, a substantially elipsoid shape, a contoured-convexed shape and a platelet shape.
According to a presently preferred embodiment, the composition is a paint composition.

### DETAILED DESCRIPTION OF THE INVENTION

In the specification, the invention will be illustrated in more detail in respect to paints. It should be understood that it is applicable also to a mixture of thin layers of at least two oxides. Typical examples of such oxides are: chromium oxides, nickel oxides, iron oxides, manganese oxides, and cobalt oxides.
According to the invention, it was found that these fillers impart a varying gloss property at the visible light which reaches even a value of below 1%. Although at this stage a theoretical explanation cannot yet be presented, it may be assumed that the low gloss effect results form the random dispersion of the radiation through the mixture and to the particular shape of the above fillers particles. The filler to be added may contain also other additives, as usually added in such formulation, such as surface active agents.
This is in contrast to the known inorganic fillers which impart a low reflectance in the above wavelengths range.
Moreover, it was surprisingly found that other compounds, although similar in their structure, such as polybutene or polypentene, impart a low transmission in the above range. In addition to the above main property of high reflectance, the fillers according to the present invention, are possessing the property of compounding with the paint.
The amount of filler to be added, may be in a broad range of between 0.1% to about 10% by weight of the composition and preferably in the range of between 0.3% to 5% by wt. depending on the particular use. Thus for instance, in case when a low gloss, such as mat paint, with a gloss below 2% is adequete, an amount of 2% to 4% by weight is adequate. The particles of the filler may be of any geometric shape preferred being the substantially round, or substantially ellipsoid and most preferred being particles having the diameter, at the narrowest shape, below 110 micrometers. Also, preferably the surface should be contoured-convexed or platelets, appearing in the pigment film with a random orientation the particle being not parallel one with another. This orientation also reduces specular reflectance and accordingly imparts low gloss.

### DESCRIPTION OF THE FIGURES

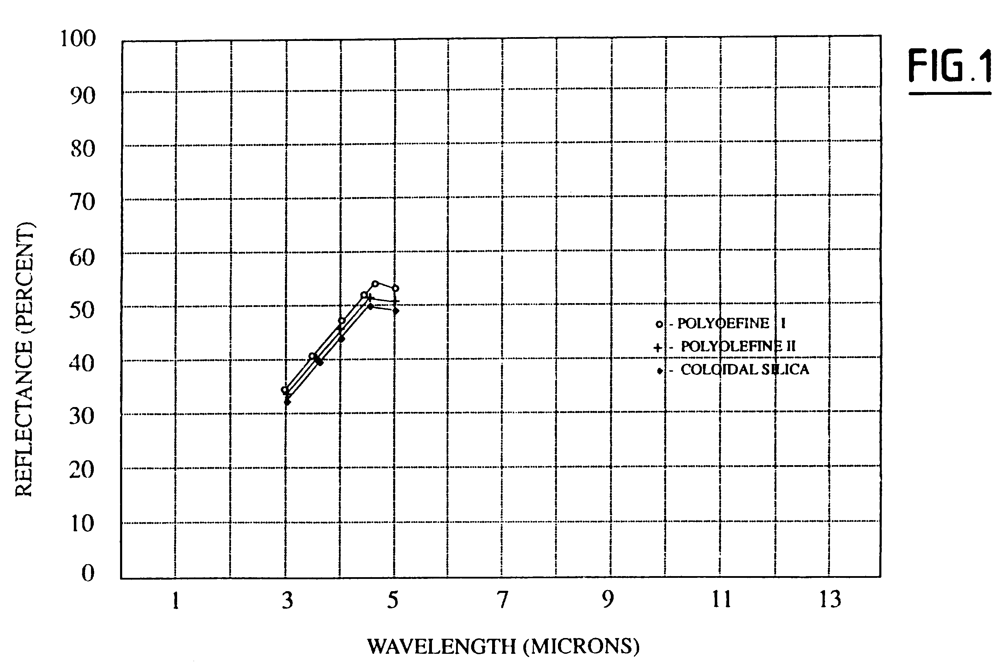

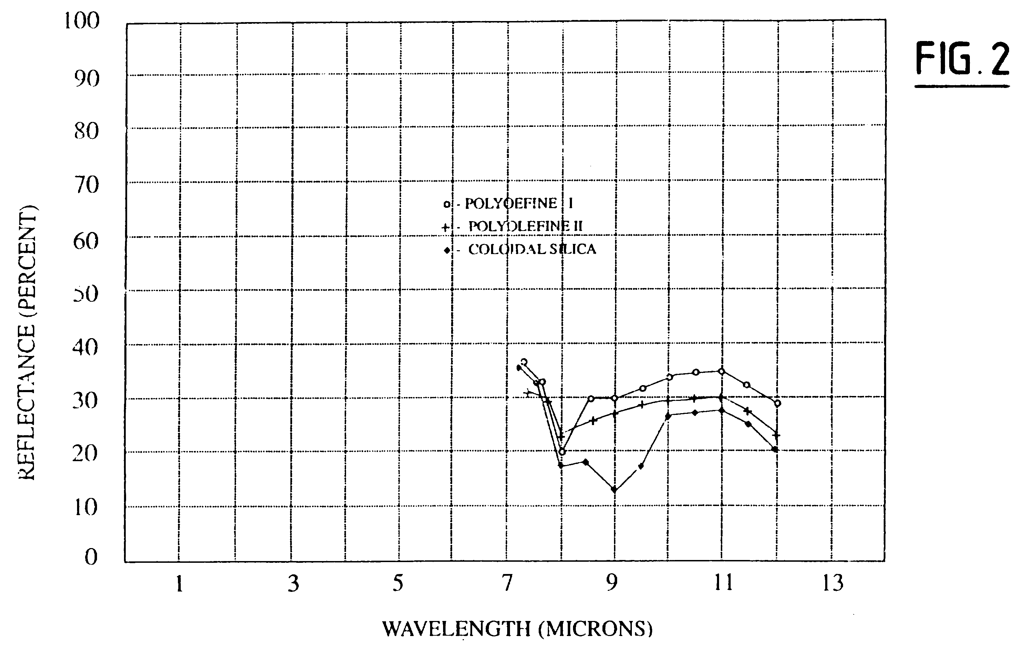

The invention will be further illustrated hereinafter by an example and in reference to figures 1 and 2.
This example and figures 1 and 2 as far as they relate to the use of polyolefin fillers are an integral part of the invention and therefore of the present specification.
Furthermore, they do not limit the scope of the invention since they are purely illustrative and the purpose is to provide a better understanding of the invention.

### Figure 1

Figure 1 illustrates the reflectance of a paint containing as fillers two types of polyethylene in powder form with particles of substantial ellipsoid shape, having a diameter at the narrowest shape below 110 micrometers, and colloidal silica having particles of a diameter below 110 micrometers as comparison, correlating to wavelength in the range of 3 to 5 microns.

### Figure 2

Figure 2, illustrates the reflectance of pigments containing as fillers two types of polyethylene in powder form with particles of substantial ellipsoid shape, having a diameter at the narrowest shape below 110 micrometers, and colloidal silica having particles of a diameter below 110 micrometers as comparison, correlating to wavelength in the range of 8 to 12 microns.

Paints possessing fillers according to the present invention are useful for greenhouses and solar collectors installations where a shadowless light is required. A person skilled in the art after reading the present specification including figures 1 and 2 which are an integral part thereof, will be in a position to insert slight modifications including the technical equivalents, without being outside the claims.
In the example, the percentages are given by weight, unless otherwise stated.

### EXAMPLE 1

A two-component paint was prepared with the following constituents (the percentages are given by weight):

### Part A:

- Oil-free polyester: 20 %
- Methyl-ethyl ketone: 7 %
- Methyl-isobutyl ketone: 5 %
- Butyl glycol acetate: 2 %
- Xylene: 4 %
- Pigments: 40 %
- Non-leafing aluminum paste 17 %
- Polethylene in powder form with particles of substantially ellipsoidal shape having a diameter at the narrowest shape below 110 micrometers: 4 %
- Surface active agenta: 0.4 % and
- Anti-setting agent: 0.4 %

### Part B

- Aliphatic Isocyanate resin 10 %
The high reflectance at thermal infra-red (3-5 µ and 8-12 µ) of this paint composition are presented in the Figures 1 and 2.

## Claims

1. A composition capable of providing a low-gloss film or coating with a high reflectance in the infra-red range, comprising :
(a) a binder to impart film forming properties, and
(b)filler particles,
characterized in that said filler particles comprise a polyolefin selected from the group consisting of ethylene homopolymers and copolymers, propylene homopolymers and copolymers, ethylene and propylene copolymers, and mixtures thereof ; said composition having an index of refraction of the polyolefin-air of a least 10% greater than that of the binder-air, said filler imparting to the compositions a mat property at the visible light.

2. The composition of claim 1, wherein the filler particles have a size below 110 micrometers and are present in the composition in the range of 0.1 % to 10% by weight of the composition.

3. The composition of claims 1 or 2, wherein the polyolefin filler particles are present in an amount ranging between 0.3 % to 5% by weight of the composition.

4. The composition of anyone of claims 1 to 3, wherein it further comprises at least one and preferably at least 2 oxydes.

5. The composition of claim 4, wherein said oxide is selected from the group consisting of chromium oxide, nickel oxide, iron oxide, manganese oxide and cobalt oxide and mixtures thereof.

6. The composition of anyone of claims 1 to 5, wherein the particles of the polyolefin filler have a shape selected from the group consisting of a substantially round shape, a substantially ellipsoid shape, a contoured-convexed shape and a platelet shape.

7. The composition according to anyone of the preceding claims, wherein this composition is a paint composition.

## Patentansprüche

1. Zusammensetzung, welche einen Film oder eine Beschichtung mit geringem Glanz und hohem Reflexionsvermögen im Infrarot-Bereich vorsehen kann, und welche umfaßt:
(a) ein Bindemittel, um Filmbildner-Eigenschaften zu verleihen, und
(b) Füllstoff-Teilchen,
dadurch gekennzeichnet, daß die Füllstoff-Teilchen ein Polyolefin, ausgewählt aus der Gruppe bestehend aus Ethylen-Homopolymeren und -Copolymeren, Propylen-Homopolymeren und -Copolymeren, Ethylen- und Propylen-Copolymeren sowie Mischungen hievon, umfassen; welche Zusammensetzung einen zumindest 10 % höheren Brechungsindex von Polyolefin-Luft aufweist als jenen von Bindemittel-Luft, welcher Füllstoff den Zusammensetzungen eine matte Eigenschaft im sichtbaren Licht verleiht.

2. Zusammensetzung nach Anspruch 1, worin die Füllstoff-Teilchen eine Größe von weniger als 110 µm aufweisen und in der Zusammensetzung im Bereich von 0,1 % bis 10 %, bezogen auf die Masse der Zusammensetzung, vorliegen.

3. Zusammensetzung nach Anspruch 1 oder 2, worin die Polyolefin-Füllstoff-Teilchen in einer Menge im Bereich von 0,3 % bis 5 %, bezogen auf die Masse der Zusammensetzung, vorliegen.

4. Zusammensetzung nach einem der Ansprüche 1 bis 3, wobei sie ferner zumindest ein und vorzugsweise zumindest 2 Oxide umfaßt.

5. Zusammensetzung nach Anspruch 4, worin das Oxid ausgewählt ist aus der Gruppe bestehend aus Chromoxid, Nickeloxid, Eisenoxid, Manganoxid und Kobaltoxid sowie Mischungen hiervon.

6. Zusammensetzung nach einem der Ansprüche 1 bis 5, worin die Teilchen des Polyolefin-Füllstoffs eine Form aufweisen, die ausgewählt ist aus der Gruppe bestehend aus einer im wesentlichen runden Form, einer im wesentlichen ellipsoidischen Form, einer konturierten-konvexen Form und einer Plättchen-Form.

7. Zusammensetzung nach einem der vorhergehenden Ansprüche, wobei diese Zusammensetzung eine Farbzusammensetzung ist.

## Revendications

1. Composition capable de former un film ou revêtement à faible brillant ayant une réflexion élevée dans le domaine de l'infrarouge, comprenant :
(a) un liant pour conférer des propriétés filmogènes, et
(b) des particules de charge,
caractérisée en ce que lesdites particules de charge comprennent une polyoléfine choisie dans le groupe consistant en les homopolymères et copolymères de l'éthylène, les homopolymères et copolymères du propylène, les copolymères de l'éthylène et du propylène, et leurs mélanges, ladite composition ayant un indice de réfraction polyoléfine-air supérieur d'au moins 10 % à l'indice de réfraction liant-air, ladite charge conférant aux compositions des propriétés mates à la lumière visible.

2. Composition selon la revendication 1, dans laquelle les particules de charge ont une taille inférieure à 110µm et sont présentes dans la composition dans le domaine de 0,1 % à 10 % par rapport à la masse de la composition.

3. Composition selon la revendication 1 ou 2, dans laquelle les particules de charge de polyoléfine sont présentes en une quantité comprise entre 0,3 % et 5 % par rapport à la masse de la composition.

4. Composition selon l'une quelconque des revendications 1 à 3, qui comprend en outre au moins un et de préférence au moins deux oxydes.

5. Composition selon la revendication 4, dans laquelle ledit oxyde est choisi dans le groupe consistant en l'oxyde de chrome, l'oxyde de nickel, l'oxyde de fer, l'oxyde de manganèse et l'oxyde de cobalt et leurs mélanges.

6. Composition selon l'une quelconque des revendications 1 à 5, dans laquelle les particules de la charge de polyoléfine ont une forme choisie dans le groupe consistant en une forme sensiblement ronde, une forme sensiblement ellipsoïdale, une forme convexe profilée et une forme de plaquette.

7. Composition selon l'une quelconque des revendications précédentes qui est une composition de peinture.
